# EUROPEAN PATENT SPECIFICATION

(11) **EP 3 795 338 B1**
(45) Date of publication and mention of the grant of the patent: **17.05.2023**
(21) Application number: 20207213.8
(22) Date of filing: 05.07.2016
(51) Int. Cl.: B29C 65/08, B29C 65/56, B29C 65/64, B29C 65/72

(54) **BONDING OBJECTS TOGETHER**
VERBINDUNG VON OBJEKTEN
LIAISON D'OBJETS LES UNS AUX AUTRES

(30) Priority: 06.07.2015 CH 9822015
(43) Date of publication of application: 24.03.2021
(62) Divisional of application: 16736069.2
(73) Proprietor: Woodwelding AG, 6362 Stansstad (CH)
(72) Inventor: MAYER, Jörg, 5702 Niederlenz (CH); LEHMANN, Mario, 2353 Les Pommerats (CH); KVIST, Joakim, 2560 Nidau (CH); POSCHNER, Patricia, 3800 Interlaken (CH)
(74) Representative: Frei Patent Attorneys

(56) References cited:
- FR-A1- 2 291 843
- US-B1- 6 514 593

## Description

The invention is in the fields of mechanical engineering and construction, especially mechanical construction, for example automotive engineering and aviation engineering.

In the automotive, aviation and other industries, due to new manufacturing techniques and new materials as well as the constant need for increased efficiency, methods of bonding objects together remain a challenge.

FR 2 291 843 discloses a method of fixing metallic trims to plastic parts of automobiles. US 6,514,593 teaches pins for mechanically locking two composite materials to each other.

It is an object of the present invention to provide approaches for bonding objects together, especially for bonding a first object to a second object.

It is an object to bond a first object to a second object, which method is especially suited for fixing the second object to the second object in a precisely defined relative position even in situations where for practical reasons it is not easily possible to precisely define joining locations on the second object.

In accordance the invention, a method of fixing a first object, to a second object is provided, which method is especially suited for fixing the first object to the second object in a precisely defined relative position even in situations where for practical reasons it is not easily possible to precisely define joining locations on the second object.

The method of attaching a first object to second object, for example a sheet-like second object, comprises the steps of:
- providing the second object with a plurality anchors fastened thereto,
   o wherein each anchor comprises an end piece with a surface portion that has a coupling structure with an undercut,
- providing the first object comprising thermoplastic liquefiable material in a solid state,
- pressing the first object against the second object with mechanical vibration acting on the first object and/or the second object until a flow portion of the thermoplastic material of the first object is liquefied and flows into the coupling structures of the end pieces,
- and letting the thermoplastic material of the first object re-solidify to yield a positive-fit connection between the first and second objects by the liquefied and re-solidified flow portion interpenetrating the coupling structures.

The step of causing the thermoplastic material to re-solidify may comprise maintaining the pressing force for some more time, for example until the flow portion is not flowable any more, with equal or smaller or higher magnitude.

In this, the anchors may have a distance between each other sufficient for a portion of the first object between two neighbouring anchors to not become flowable during the step of pressing and causing the vibration to act.

Also, in embodiments at least the end pieces of the anchors are reversibly removable from the second object. The anchors each comprise two anchor parts, an anchoring part anchored relative to the second object, and an end piece part comprising the end piece.

For example, the connection between the end pieces parts and the second object (especially between the end piece parts and the anchoring parts) may be a reversible click-on connection (click-on connection). Then, the end piece parts may be click-on parts.

Click-on connections require a relatively precise relative positioning of the two portions clicked on each other for the connection to work smoothly. If a base part of the click-on connection is to be fastened to a second object, a based part to a first object, and if the first object in the clicked-on state needs to be in a precisely defined position relative to the second object, then prior art approaches require both:
- a high precision positioning of the base part on the second object; and
- a high precision positioning of the based parts on the first object, taking into account both, the pattern of positions of the base parts and the position of the base parts on the second object.

The approach according to the invention brings about the substantial advantage that neither of these requirements has to be met. The operator just has to position the first object relative to the second object (which may for example be done visually) and to carry out the process. The exact locations of the pattern of anchors on the second object are not critical parameters, and due to the approach of the second aspect of the invention, the fastening location of the anchors in the first object need not be predefined but are defined in the process only. As a result, a major advantage in terms of process efficiency results without the required precision being jeopardized.

The process of causing a connection between the end pieces and the first object may be carried out sequentially for the different end pieces, one after the other, or simultaneously for at least some of the anchors, for example by using a sonotrode with a large coupling surface acting on the first object or possibly on the second object. The second object in this may be of a metal sheet, constituted by a metal sheet in the narrow sense of the word (manufactured by rolling, or a metal sheet manufactured in a cast or other process. Especially, the second object may belong to a complex object, such as a body of a vehicle, a building, a complex installation, etc.

The anchors (in case of anchors comprising a plurality of parts the anchoring parts thereof) may be fastened to the second object any suitable means, including conventional means. In embodiments, the anchors (anchoring parts are fastened to fastening openings thereof by the approach taught in WO 2015/117253 for example referring to Fig. 24 (but for example with a separate counter element instead of a sheet of the second object serving as the counter element) or by the method as taught in Swiss patent application 00 778/16.

The first object may be an object to be affixed to the second object. In an example, the second object is carrier structure for an other element.
- Often, when a first object is connected to a second object, the following requirements are to be met:the first object has to be removable
- the connection points, where connectors are attached to the second object, have to be sealed
- the relative positioning of according receiver holes of the second object and the fixation locations on of the first object to be accurate
- the fixation should be cost-efficient.

In accordance with the prior art, often plurality of clips are used to reversibly fix a first object to a second object. The second aspect of the invention aims at replacing this manual process and in addition at providing an alternative that brings about a watertight, pre-assemblable, robust and efficient-to manufacture solution.

The liquefaction of the flow portion may be primarily caused by friction between the vibrating object and the surface of the respective other object, which friction heats the object that has the thermoplastic material superficially.

In this text the expression "thermoplastic material being capable of being made flowable e.g. by mechanical vibration" or in short "liquefiable thermoplastic material" or "liquefiable material" or "thermoplastic" is used for describing a material comprising at least one thermoplastic component, which material becomes liquid (flowable) when heated, in particular when heated through friction i.e. when arranged at one of a pair of surfaces (contact faces) being in contact with each other and vibrationally moved relative to each other, wherein the frequency of the vibration has the properties discussed hereinbefore. In some situations, for example if the first object itself has to carry substantial loads, it may be advantageous if the material has an elasticity coefficient of more than 0.5 GPa. In other embodiments, the elasticity coefficient may be below this value, as the vibration conducting properties of the first object thermoplastic material do not play a role in the process.

Thermoplastic materials are well-known in the automotive and aviation industry. For the purpose of the method according to the present invention, especially thermoplastic materials known for applications in these industries may be used.

A thermoplastic material suitable for the method according to the invention is solid at room temperature (or at a temperature at which the method is carried out). It preferably comprises a polymeric phase (especially C, P, S or Si chain based) that transforms from solid into liquid or flowable above a critical temperature range, for example by melting, and re-transforms into a solid material when again cooled below the critical temperature range, for example by crystallization, whereby the viscosity of the solid phase is several orders of magnitude (at least three orders of magnitude) higher than of the liquid phase. The thermoplastic material will generally comprise a polymeric component that is not cross-linked covalently or cross-linked in a manner that the cross-linking bonds open reversibly upon heating to or above a melting temperature range. The polymer material may further comprise a filler, e.g. fibres or particles of material which has no thermoplastic properties or has thermoplastic properties including a melting temperature range which is considerably higher than the melting temperature range of the basic polymer.

In this text, generally a "non-liquefiable" material is a material that does not liquefy at temperatures reached during the process, thus especially at temperatures at which the thermoplastic material of the first object is liquefied. This does not exclude the possibility that the non-liquefiable material would be capable of liquefying at temperatures that are not reached during the process, generally far (for example by at least 80°C) above a liquefaction temperature of the thermoplastic material or thermoplastic materials liquefied during the process. The liquefaction temperature is the melting temperature for crystalline polymers. For amorphous thermoplastics the liquefaction temperature (also called "melting temperature in this text") is a temperature above the glass transition temperature at which the becomes sufficiently flowable, sometimes referred to as the 'flow temperature' (sometimes defined as the lowest temperature at which extrusion is possible), for example the temperature at which the viscosity drops to below 10⁴ Pa^{∗}s (in embodiments, especially with polymers substantially without fiber reinforcement, to below 10³ Pa^{∗}s)), of the thermoplastic material.

For example, non-liquefiable material may be a metal, such as aluminum or steel, or a hard plastic, for example a reinforced or not reinforced thermosetting polymer or a reinforced or not reinforced thermoplastic with a melting temperature (and/or glass transition temperature) considerably higher than the melting temperature/glass transition temperature of the liquefiable part, for example with a melting temperature and/or glass transition temperature higher by at least 50°C or 80°C.

Specific embodiments of thermoplastic materials are: Polyetherketone (PEEK), polyesters, such as polybutylene terephthalate (PBT) or Polyethylenterephthalat (PET), Polyetherimide, a polyamide, for example Polyamide 12, Polyamide 11, Polyamide 6, or Polyamide 66, Polymethylmethacrylate (PMMA), Polyoxymethylene, or polycarbonateurethane, a polycarbonate or a polyester carbonate, or also an acrylonitrile butadiene styrene (ABS), an Acrylester-Styrol-Acrylnitril (ASA), Styrene-acrylonitrile, polyvinyl chloride (PVC), polyethylene, polypropylene, and polystyrene, or copolymers or mixtures of these.

In embodiments in which both, the first and the second object comprise thermoplastic material and no welding is desired, the material pairing is chosen such that the melting temperature of the second object material is substantially higher than the melting temperature of the first object material, for example higher by at least 50°. Suitable material pairings are for example polycarbonate or PBT for the first object and PEEK for the second object.

In addition to the thermoplastic polymer, the thermoplastic material may also comprise a suitable filler, for example reinforcing fibers, such as glass and/or carbon fibers. The fibers may be short fibers. Long fibers or continuous fibers may be used especially for portions of the first and/or of the second object that are not liquefied during the process.

The fiber material (if any) may be any material known for fiber reinforcement, especially carbon, glass, Kevlar, ceramic, e.g. mullite, silicon carbide or silicon nitride, high-strength polyethylene (Dyneema), etc..

Other fillers, not having the shapes of fibers, are also possible, for example powder particles.

Mechanical vibration or oscillation suitable for the method according to the invention has preferably a frequency between 2 and 200 kHz (even more preferably ultrasonic vibration having a frequency between 10 and 100 kHz, or between 20 and 40 kHz) and a vibration energy of 0.2 to 20 W per square millimeter of active surface. The vibrating tool (sonotrode) is e.g. designed such that its contact face oscillates predominantly in the direction of the tool axis (longitudinal vibration) and with an amplitude of between 1 and 100µm, preferably around 30 to 60 µm. Such preferred vibrations are e.g. produced by ultrasonic devices as e.g. known from ultrasonic welding.

In this text, the terms "proximal" and "distal" are used to refer to directions and locations, namely "proximal" is the side of the bond from which an operator or machine applies the mechanical vibrations, whereas distal is the opposite side.

Hereinafter, principles and embodiments of the invention are illustrated in drawings. All drawings are schematical and not to scale. The drawings are used to explain the invention and embodiments thereof and are not meant to restrict the scope of the invention. In the drawings, same reference numbers refer to same or analogous elements. Terms designating the orientation like "proximal", "distal", etc. are used in the same way for all aspects and drawings. In this, The drawings show:
- Figs. 1a and 1b: the process according to embodiments of the invention;
- Fig. 2: a configuration with four fastening locations; and
- Fig. 3a and 3b: a possible application of the invention.

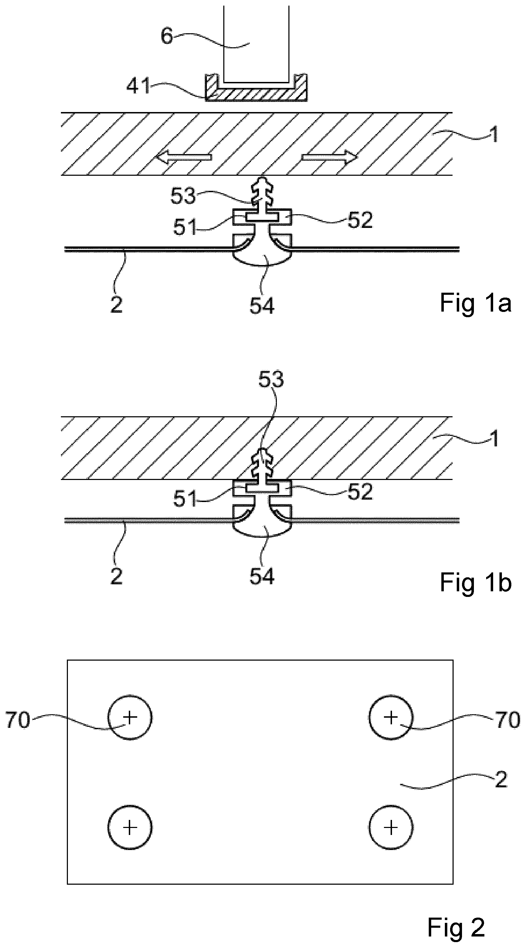

**Figure 1a** illustrates a set-up for an embodiment of the invention. The anchor 51 has an anchoring part 54 anchored in an opening of the second object 2 and a removable click on part 52. The removable click on part 52 comprises an end piece 53 with a coupling structure that in the shown embodiment is barb-like. In the figure, the end piece 53 is shown to be metallic and embedded in plastic material of the click on part 52; however the click on part could also be one-piece, for example one-piece metallic.

For the process, the first object 1 can be moved (double arrows) to take up any tolerance and for its position to be optimized for example from an aesthetical point of view (such as adjusted to hatch door frame regarding visual gap). Then mechanical vibration acts on the first object or possibly the second object until the flow portion becomes flowable and flows into the structure to soundly connect the end piece to the first object 1. A paint/lacquer protection 41 may be applied between the sonotrode 6 and the first object 1 if the outer surface of the first object is visual in the end product (this option applying to all embodiments of all aspects of the invention if necessary or advisable).

**Figure 1b** shows the resulting situation. Removing of the panel is possible by clicking off the click on part.

This approach features the advantage that positioning of the anchors does not need to be precise, and nevertheless visual precision of the fastening is possible.

This is illustrated for example in **Figure 2****,** where a second object 2 with a plurality of fastening locations 70 is shown, each fastening location for example defined by an anchor attached to the second object. The positions of the fastening locations neither need to be very precisely defined (and hence may vary to a certain extend from article to article in a series of articles), nor need they be exactly known. A first object is placed relative to the second object and thereby may be positioned in an exact relationship with other features of the second object than the fastening location, for example features that remain visible when the first object is placed relative to the second object and thereby covers the fastening locations.

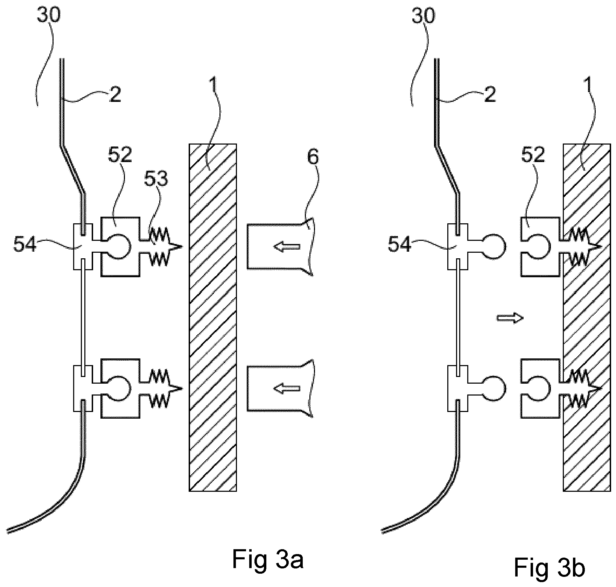

**Figures 3a and 3b** illustrate an application, with the dimensions of the anchors and the thickness of the second object being shown exaggeratedly to better illustrate the invention.

A complex article 30 comprises the second object 2 that carries the anchors, each comprising an anchoring part 54 anchored relative to the second object 2 and a click-on part 52 clicked on the anchoring part. The first object 1 here has a plate shape. It may for example be a plastic carrier structure for a further element. For the process of fixing the first object to the second object 2, the click-on parts are clicked on the anchoring parts, and at least one sonotrode 6 is used to impinge the first object with a pressing force and mechanical energy (Fig. 3a).

After the fixing process, the positions of the click-on parts are defined by their being anchored in the first object, and the first object is thereby reversibly removable by releasing the click-on connection (Fig. 3b).

## Claims

1. A method of fixing a first object (1) to a second object (2), the method comprising the steps of:
- providing the second object (2) with a plurality anchors (51) fastened thereto,
o wherein each anchor (51) comprises an end piece (53) with a surface portion that has a coupling structure with an undercut,
- providing the first object (1) comprising thermoplastic liquefiable material in a solid state,
- pressing the first object (1) against the second object (2) with mechanical vibration acting on the first object (1) and/or the second object (2) until a flow portion of the thermoplastic material of the first object is liquefied and flows into the coupling structures of the end pieces (53),
- and letting the thermoplastic material of the first object (1) re-solidify to yield a positive-fit connection between the first and second objects(1, 2) by the liquefied and re-solidified flow portion interpenetrating the coupling structures, **characterized in that** the anchors (51) each comprise two anchor parts, an anchoring part (54) and an end piece part (52) comprising the end piece (53), wherein the two anchor parts are reversibly detachable from each other.

2. The method according to claim 1, the second object (2) being sheet-like.

3. The method according to claim 1 or 2, wherein the step of pressing the first object (1) against the second object (2) with mechanical vibration acting on the first object and/or the second object is carried out sequentially for the different end pieces (53).

4. The method according to claim 1 or 2, wherein the step of pressing the first object (1) against the second object (2) with mechanical vibration acting on the first object (1) and/or the second object (2) is carried out simultaneously for at least some of the end pieces (53).

5. The method according to claim 4, wherein the step of pressing the first object (1) against the second object (2) with mechanical vibration acting on the first object (1) and/or the second object (2) is carried out using a sonotrode (6) with a large coupling surface covering a plurality of end pieces, the sonotrode (6) acting on the first object (1) or on the second object (2).

6. The method according to claim any one of claims 1-5 wherein the end piece part (52) is a click-on part capable of being reversibly clicked on the anchoring part (54).

7. The method according to any one of claims 1-6, wherein pressing the first object (1) against the second object (2) with mechanical vibration acting on the first object (1) and/or the second object (2) comprises coupling the mechanical vibration into the first object (1) by a sonotrode (6).

8. The method according to claim 7, wherein during the step of pressing the first object (1) against the second object (2) with mechanical vibration acting on the first object (1), the sonotrode (6) presses against the first object (1), optionally with an intermediate piece between the sonotrode (6) and the first object (1).

9. The method according to any one of claims 1-8, wherein during the step of pressing the first object (1) against the second object (2) with mechanical vibration acting on the first object (1) and/or the second object (2), portions of the first object (1) between different end pieces (53) remain solid.

## Patentansprüche

1. Verfahren zum Befestigen eines ersten Objekts (1) an einem zweiten Objekt (2), wobei das Verfahren die folgenden Schritte umfasst::
- Versehen des zweiten Gegenstandes (2) mit einer Vielzahl von daran befestigten Ankern (51),
o wobei jeder Anker (51) ein Endstück (53) mit einem Oberflächenabschnitt umfasst, der eine Kupplungsstruktur mit einer Hinterschneidung aufweist,
- Bereitstellen des ersten Objekts (1), das thermoplastisches verflüssigbares Material in einem festen Zustand umfasst,
- Pressen des ersten Objekts (1) gegen das zweite Objekt (2) während mechanische Vibrationen auf das erste Objekt (1) und/oder das zweite Objekt (2) einwirken, bis ein Fließanteil des thermoplastischen Materials des ersten Objekts verflüssigt ist und in die Kupplungsstrukturen der Endstücke (53) fließt,
- Wiedererstarrenlassen des thermoplastischen Materials des ersten Objekts (1), um eine formschlüssige Verbindung zwischen dem ersten und dem zweiten Objekt (1, 2) durch den verflüssigten und wieder erstarrten Fliessanteil zu ergeben, der die Kupplungsstrukturen durchdringt,
**dadurch gekennzeichnet, dass** die Anker (51) jeweils zwei Ankerteile, einen Verankerungsteil (54) und einen Endstückteil (52), der das Endstück (53) umfasst, umfassen, wobei die beiden Ankerteile reversibel voneinander abnehmbar sind.

2. Verfahren nach Anspruch 1, wobei der zweite Gegenstand (2) blechartig ist.

3. Verfahren nach Anspruch 1 oder 2, wobei der Schritt des Andrückens des ersten Gegenstandes (1) gegen den zweiten Gegenstand (2) mit auf den ersten Gegenstand und/oder den zweiten Gegenstand einwirkender mechanischer Vibration für die verschiedenen Endstücke (53) nacheinander durchgeführt wird.

4. Verfahren nach Anspruch 1 oder 2, wobei der Schritt des Pressens des ersten Objekts (1) gegen das zweite Objekt (2) mit mechanischer Vibration, die auf das erste Objekt (1) und/oder das zweite Objekt (2) einwirkt, für zumindest einige der Endstücke (53) gleichzeitig ausgeführt wird.

5. Verfahren nach Anspruch 4, wobei der Schritt des Andrückens des ersten Objekts (1) gegen das zweite Objekt (2) mit auf das erste Objekt (1) und/oder das zweite Objekt (2) einwirkender mechanischer Vibration unter Verwendung einer Sonotrode (6) mit großer, mehrere Endstücke abdeckender Koppelfläche durchgeführt wird, wobei die Sonotrode (6) auf das erste Objekt (1) oder auf das zweite Objekt (2) einwirkt.

6. Verfahren nach einem der Ansprüche 1 bis 5, wobei das Endstückteil (52) ein Klickteil ist, das reversibel auf das Verankerungsteil (54) geklickt werden kann.

7. Verfahren nach einem der Ansprüche 1 bis 6, wobei das Pressen des ersten Objekts (1) gegen das zweite Objekt (2) mit mechanischer Vibration, die auf das erste Objekt (1) und/oder das zweite Objekt (2) wirkt, das Einkoppeln der mechanischen Vibration in das erste Objekt (1) durch eine Sonotrode (6) umfasst.

8. Verfahren nach Anspruch 7, wobei während des Schritts des Andrückens des ersten Objekts (1) gegen das zweite Objekt (2) mit auf das erste Objekt (1) einwirkenden mechanischen Vibrationen die Sonotrode (6) gegen das erste Objekt (1) drückt, optional mit einem Zwischenstück zwischen der Sonotrode (6) und dem ersten Objekt (1).

9. Verfahren nach einem der Ansprüche 1-8, wobei während des Schritts des Pressens des ersten Objekts (1) gegen das zweite Objekt (2) mit mechanischen Vibrationen, die auf das erste Objekt (1) und/oder das zweite Objekt (2) einwirken, Teile des ersten Objekts (1) zwischen verschiedenen Endstücken (53) fest bleiben.

## Revendications

1. Procédé de fixation d'un premier objet (1) à un second objet (2), comprenant les étapes suivantes
- fournir au second objet (2) une pluralité d'ancres (51) qui y sont fixées,
• dans lequel chaque ancre (51) comprend une pièce d'extrémité (53) avec une partie de surface qui a une structure d'accouplement avec une contre-dépouille,
- fournir le premier objet (1) comprenant un matériau thermoplastique liquéfiable à l'état solide,
- presser le premier objet (1) contre le second objet (2) avec une vibration mécanique agissant sur le premier objet (1) et/ou le second objet (2) jusqu'à ce qu'une partie de flux de la matière thermoplastique du premier objet soit liquéfiée et s'écoule dans les structures d'accouplement des pièces d'extrémité (53),
- et laisser le matériau thermoplastique du premier objet (1) se resolidifier pour produire une connexion positive entre le premier et le deuxième objet (1, 2) par la partie de flux liquéfiée et resolidifiée interpénétrant les structures de couplage,
**caractérisé en ce que** les ancres (51) comprennent chacune deux parties, une partie d'ancrage (54) et une partie de pièce d'extrémité (52) comprenant la pièce d'extrémité (53), dans laquelle les deux parties sont détachables de manière réversible l'une de l'autre.

2. Procédé selon la revendication 1, le second objet (2) étant en forme de feuille.

3. Procédé selon la revendication 1 ou 2, dans lequel l'étape consistant à presser le premier objet (1) contre le second objet (2) avec une vibration mécanique agissant sur le premier objet et/ou le second objet est effectuée séquentiellement pour les différentes pièces d'extrémité (53).

4. Procédé selon la revendication 1 ou 2, dans lequel l'étape consistant à presser le premier objet (1) contre le second objet (2) avec une vibration mécanique agissant sur le premier objet (1) et/ou le second objet (2) est effectuée simultanément pour au moins certaines des pièces d'extrémité (53).

5. Procédé selon la revendication 4, dans lequel l'étape consistant à presser le premier objet (1) contre le second objet (2) avec une vibration mécanique agissant sur le premier objet (1) et/ou le second objet (2) est effectuée à l'aide d'une sonotrode (6) avec une grande surface de couplage couvrant une pluralité d'embouts, la sonotrode (6) agissant sur le premier objet (1) ou sur le second objet (2).

6. Procédé selon l'une quelconque des revendications 1 à 5, dans lequel la partie de pièce d'extrémité (52) est une pièce à cliquer capable d'être cliquée de manière réversible sur la pièce d'ancrage (54).

7. Procédé selon l'une quelconque des revendications 1 à 6, dans lequel le fait de presser le premier objet (1) contre le second objet (2) avec une vibration mécanique agissant sur le premier objet (1) et/ou le second objet (2) comprend le couplage de la vibration mécanique dans le premier objet (1) par une sonotrode (6).

8. Procédé selon la revendication 7, dans lequel, au cours de l'étape consistant à presser le premier objet (1) contre le second objet (2) avec une vibration mécanique agissant sur le premier objet (1), la sonotrode (6) presse contre le premier objet (1), éventuellement avec une pièce intermédiaire entre la sonotrode (6) et le premier objet (1).

9. La procédé selon l'une des revendications 1 à 8, dans laquelle pendant l'étape de pression du premier objet (1) contre le second objet (2) avec une vibration mécanique agissant sur le premier objet (1) et/ou le second objet (2), les parties du premier objet (1) entre les différentes pièces d'extrémité (53) restent solides.
